# EUROPÄISCHE PATENTSCHRIFT

(11) **EP 1 765 643 B1**
(45) Veröffentlichungstag und Bekanntmachung des Hinweises auf die Patenterteilung: **23.04.2008**
(21) Anmeldenummer: 05769953.0
(22) Anmeldetag: 05.07.2005
(51) Int. Cl.: B60R 21/015

(54) **SYSTEM ZUM ERKENNEN DER BELEGUNG EINES FAHRZEUGSITZES**
SYSTEM FOR IDENTIFYING OCCUPANCY OF A VEHICLE SEAT
SYSTEME POUR DETERMINER L'OCCUPATION D'UN SIEGE DE VEHICULE A MOTEUR

(30) Priorität: 12.07.2004 DE 102004033795
(43) Veröffentlichungstag der Anmeldung: 28.03.2007
(73) Patentinhaber: SIEMENS AKTIENGESELLSCHAFT, 80333 München (DE)
(72) Erfinder: KARGES, Peter Park Heim Yamate Ueno-cho 202, Kanagawa Prefect, 231-0842 Yokohama City (JP); KREMPL, Michael, 84061 Ergoldsbach (DE); MELZL, Hubert, 93080 Pentling (DE); WILD, Gerhard, 93055 Regensburg (DE)
(86) Internationale Anmeldenummer: PCT/EP2005/053195
(87) Internationale Veröffentlichungsnummer: WO 2006/005697

(56) Entgegenhaltungen:
- WO-A-03/069293
- WO-A1-97/10115
- DE-A1- 10 142 813
- DE-A1- 10 160 121
- DE-A1- 10 223 218
- US-A1- 2001 040 056
- US-B1- 6 282 473

## Beschreibung

Die Erfindung betrifft ein System zum Erkennen der Belegung eines Fahrzeugsitzes. Dazu sind Messelemente flächig auf der Sitzfläche des Fahrzeugsitzes angeordnet, an denen ein gewichtsabhängiges elektrisches Signal abgegriffen werden kann. Die Messelemente sind dabei in mehreren Netzen angeordnet und darin jeweils so miteinander verschaltet, dass ein elektrisches Gesamtsignal für jedes Netz ermittelt werden kann; damit kann eine Auswerteeinheit, die beispielsweise mit jedem der Netze verbunden ist, feststellen, ob ein Netz belegt oder unbelegt ist. Abhängig davon wird die Auslösung eines Insassenrückhaltemittels bei einem Aufprallunfall angepasst, wenn dies zu einem bestmöglichen Schutz eines Fahrzeuginsassen erforderlich ist.

Aus den Druckschriften DE 101 60 121 C2 und DE 102 23 218 A1 ist es bekannt als Messelemente beispielsweise gewichtssensitive Widerstandselemente zu verwenden, die auf der Fläche einer Sitzmatte und mit dieser auf der Sitzfläche eines Fahrzeugsitzes angeordnet sind. Bei einem auf die Widerstandselemente wirkenden Gewicht, das beispielsweise durch einen Gegenstand oder einen Fahrzeuginsassen hervorgerufen wird, verändert sich der elektrische Widerstand der Messelemente gemäß einer in der Auswerteeinheit hinterlegten Abhängigkeit (Kennlinie). Die Veränderung der elektrischen Widerstände wird durch eine geeignete Auswerteelektronik erfasst und über die bekannte Abhängigkeit der Widerstandswerte vom aufliegenden Gewicht in einen Wert umgesetzt, der etwa dem auf das Widerstandselement wirkende Gewicht entspricht. Abhängig von der Größe und/ oder der Verteilung der einwirkenden Gewichtskraft wird die Auslösung eines Insassenrückhaltemittels gegebenenfalls beeinflusst, um einen Insassen des Fahrzeugs optimal zu schützen.

Aus der Veröffentlichungsschrift US 2001/0040056 A1 und aus dem Patent EP 0 850 154 B1 ist es weiterhin bekannt, gewichtssensitive Widerstandselemente in mehrere Netze zu verschalten, um verschiedene Werte aus den Widerstandselementen einer Sitzmatte zu gewinnen, die weiteren, ggf. im obigen Sinne nutzbringenden Aufschluss über die Sitzposition eines Fahrzeuginsassen geben können.

Die US-A-2001/0040056, als nächstliegender Stand der Technik betrachtet, zeigt ein System zum Erkennen der Belegung eines Fahrzeugsitzes mit flächig auf der Sitzfläche des Fahrzeugsitzes angeordneten Messelementen, an denen je ein elektrisches Signal abgegriffen werden kann, das abhängig von der aufgebrachten Gewichtskraft variiert, und die in mehreren Netzen so miteinander verschaltet sind, dass für jedes Netz je ein elektrisches Gesamtsignal ermittelt wird.

Aus der Offenlegungsschrift DE 101 42 813 A1 ist weiterhin ein System bekannt ([0002]), bei dem ein Gurtschlusssensor erkennt, ob ein Sicherheitsgurt an dem Fahrzeugsitz angelegt ist oder nicht. Ein entsprechendes Signal wird einer Auswerteeinheit übermittelt, die daraufhin einen Warnhinweis an einen Fahrzeuginsassen ausgibt, beispielsweise eine Warnlampe einschaltet oder einen akustischen Warnton ausgibt.

Wird jedoch immer ein Warnsignal im Fahrzeug ausgegeben, sobald ein im Gurtschluss nicht eingerasteter Sicherheitsgurt erkannt wird, so kann dies für einen Fahrgast unnötig oder sogar störend sein, nämlich beispielsweise dann, wenn kein Fahrgast auf dem Kraftfahrzeugsitz sitzt. Deshalb wird üblicherweise vor Ausgabe eines entsprechenden Warnhinweises überprüft, ob der Fahrzeugsitz überhaupt durch eine Person belegt ist. Dazu kann beispielsweise die Auswertung von Signalen einer bekannten Sensorsitzmatte oder eines anderen Sitzbelegungserkennungssystems dienen.

Von der Auslösung eines Insassenrückhaltemittels kann die Gesundheit oder sogar das Leben eines Fahrzeuginsassen abhängen. Deshalb sollte ein Insassenschutzmittel bei einem Anfallgeschehen im Zweifelsfall üblicherweise auf jeden Fall ausgelöst werden, wenn ein Insasse auf dem Fahrzeugsitz erkannt wurde. Und zwar sogar auch schon dann, wenn die Anwesenheit eines Fahrzeuginsassen nur aufgrund weniger verfügbarer Signale mit entsprechend geringer Aussagekraft für die Insassenerkennung erkannt wird.

Im Vergleich dazu, sollte ein Fahrzeuginsasse vergleichsweise mit weniger Zweifel erkannt werden, bevor ein Warnhinweis wegen eines nicht angelegten Sicherheitsgurts ausgegeben wird; beispielsweise sollte ein auf einen Beifahrersitz abgestelltes Paket nicht bereits einen solchen Warnhinweis auslösen.

Aufgabe der vorliegenden Erfindung ist es deshalb, ein bekanntes System zum Erkennen der Belegung eines Fahrzeugsitzes so auszugestalten, dass das Auslöseverhalten eines Insassenrückhaltemittels im Bedarfsfall einerseits bereits bei einem wenig plausibilisierten Erkennen eines aufsitzenden Fahrzeuginsassen verändert wird, andererseits das Ausgeben eines Warnhinweises aufgrund eines nicht angelegten Sicherheitsgurts jedoch einer zusätzlichen Plausibilisierung eines tatsächlich vorhandenen Fahrzeuginsassen bedarf.

Die Aufgabe wird gelöst durch ein System gemäß Anspruch 1.

Das erfindungsgemäße System zum Erkennen der Belegung eines Fahrzeugsitzes weist flächig auf der Sitzfläche des Fahrzeugsitzes angeordnete Messelemente auf, an denen je ein elektrisches Signal abgegriffen werden kann, das abhängig von der aufgebrachten Gewichtskraft variiert und die in mehreren Netzen so miteinander verschaltet sind, dass für jedes Netz ein elektrisches Gesamtsignal ermittelt werden kann, aus dem eine Auswerteeinheit feststellen kann, ob ein Netz belegt oder unbelegt ist. Die Auslösung eines Insassenrückhaltemittels, beispielsweise eines Frontairbags, Seitenairbags, Knieairbags, Vorhangairbags, Gurtstraffers oder ähnlichem, wird beeinflusst, wenn mindestens ein Netz oder eine Kombination von wenigen Netzen belegt ist bzw. sind. Des Weiteren erkennt die erfindungsgemäße Auswerteeinheit aus den Signalen eines Gurtschlosssensors, ob ein Sicherheitsgurt an dem Fahrzeugsitz angelegt ist oder nicht. Bei dem erfindungsgemäßen System wird daraufhin ein entsprechender Warnhinweis über einen nicht angelegten Sicherheitsgurt nur dann an das Fahrzeuginnere ausgegeben, wenn der Sicherheitsgurt als nicht angelegt erkannt wurde und gleichzeitig ein weiteres Netz oder eine Kombination von weiteren Netzen als belegt erkannt wurde bzw. wurden, wobei mindestens ein solches weiteres Netz in Längs- oder Querrichtung des Fahrzeugs benachbart zu dem bereits erkannten Netz angeordnet ist.

Bei der erfindungsgemäßen Unterteilung einer Sensormatte in verschiedene Netze kann für jedes Netz zwar ein Belegungszustand des Fahrzeugsitzes ermittelt werden. Manche Kombinationen sind aber unplausibel für eine Belegung mit einem Fahrzeuginsassen: Liegen beispielsweise zwei belegte Netze an diagonal gegenüberliegenden Enden der flächigen Anordnung von Messelementen, deutet dies eher auf zwei Auflagepunkte eines Gegenstandes hin als auf einen Fahrzeuginsassen. In einem solchen Fall sollte zwar beispielsweise ein Airbag für diesen Fahrzeugsitz ausgelöst werden, da sich auch eine Person in einer unüblichen Stellung auf dem Fahrzeugsitz befinden könnte, der Warnhinweis über einen gegebenenfalls nicht angelegten Sicherheitsgurt kann jedoch getrost unterbleiben.

Vorteilhafte Ausführungsformen der Erfindung sind in den Unteransprüchen angegeben, wobei jede sinnvolle Kombination von Merkmalen mit dem Anspruch 1 möglich ist.

Vorzugsweise ist für jedes belegte Netz oder auch für jede Gruppe von belegten Netzen das weitere belegte Netz, oder die Gruppe von weiteren belegten Netzen, das/ die zur Ausgabe eines Warnhinweises über einen nicht angelegten Sicherheitsgurt an den Fahrgastraum notwendig erkannt werden muss/ müssen, entsprechend einer Regelvorschrift bekannt. Auf diese Weise wird ein auf die Unterscheidung einer Beeinflussung der Auslösung eines Insassenschutzmittels einerseits und der Ausgabe einer Sicherheitsgurtwarnmeldung andererseits besonders einfach. Beispielsweise kann diese Regel in einer Zuordnungstabelle in einem Speicher der Auswerteeinheit hinterlegt sein.

Das erfindungsgemäße System ist besonders vorteilhaft, wenn es sich bei den Messelementen um parallel geschaltete Widerstände handelt, deren Widerstandswerte mit der aufgebrachten Gewichtskraft gemäß einer Kennlinie variieren. Die gewichtsabhängig variierenden Widerstände der Messelemente können dann beispielsweise in Form von Spannungen an den Widerstandselementen oder an den Netzen von Widerstandselementen abgegriffen werden, während der Stromfluss durch ein Widerstandsnetz konstant gehalten wird. Ebenfalls könnte allerdings auch ein gewichtsabhängig variierender Stromfluss durch die Widerstände oder Widerstandsnetze gemessen werden, während die Spannungsversorgung der Widerstände oder Widerstandsnetze konstant gehalten wird. Gerade bei einer solchen Parallelschaltung von Widerstandselementen definiert ein Widerstandsnetz die kleinste Fläche, für die ein Belegungszustand ermittelt werden kann. Andere Systeme zur Erkennung der Fahrzeugsitzbelegung haben flächig auf dem Fahrzeugsitz verteilt angeordnete Sensorelemente, die individuell angesprochen werden können. Dort ist die kleinste Flächeneinheit, die zur Bewertung eines Sitzbelegungszustands herangezogen werden kann, lediglich die aktive Sensorfläche eines einzelnen Sensorelements. Die erfindungsgemäßen verschiedenen Plausibilisierungsstufen sind hier lediglich mit einem größeren Rechenaufwand in der Auswerteeinheit zu ermitteln.

Bei parallelen Widerstandselementen ist es weiterhin besonders vorteilhaft, wenn seriell vor einem Netz ein fester Vorwiderstand eingebracht ist. Ein solcher Vorwiderstand kann zu Kurzschlusserkennung für das zugehörige Netz dienen.

Im Folgenden wird die Erfindung anhand von Ausführungsbeispielen erläutert. Es zeigen:
- Figur 1: ein Ausführungsbeispiel für ein erfindungsgemäßes System,
- Figur 2: eine Regeltabelle für Kombinationen einzelner Netze,
- Figur 3: ein Ausführungsbeispiel für ein erfindungsgemäßes System, dargestellt als Verfahrensablauf,
- Figur 4: ein Ausführungsbeispiel einer Anordnung von Messelementen eines erfindungemäßen Systems.

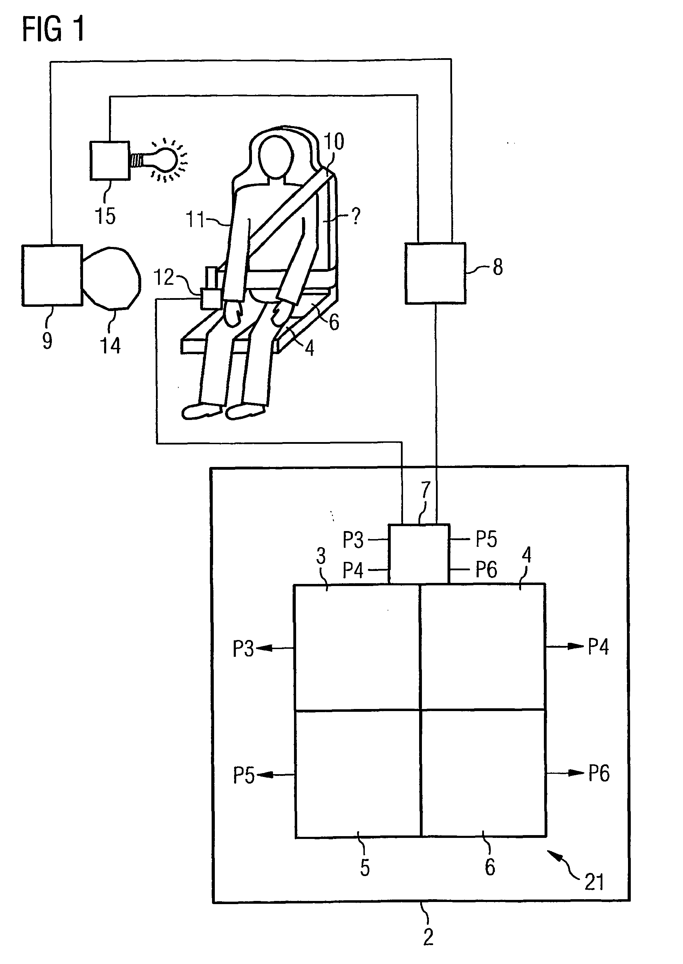

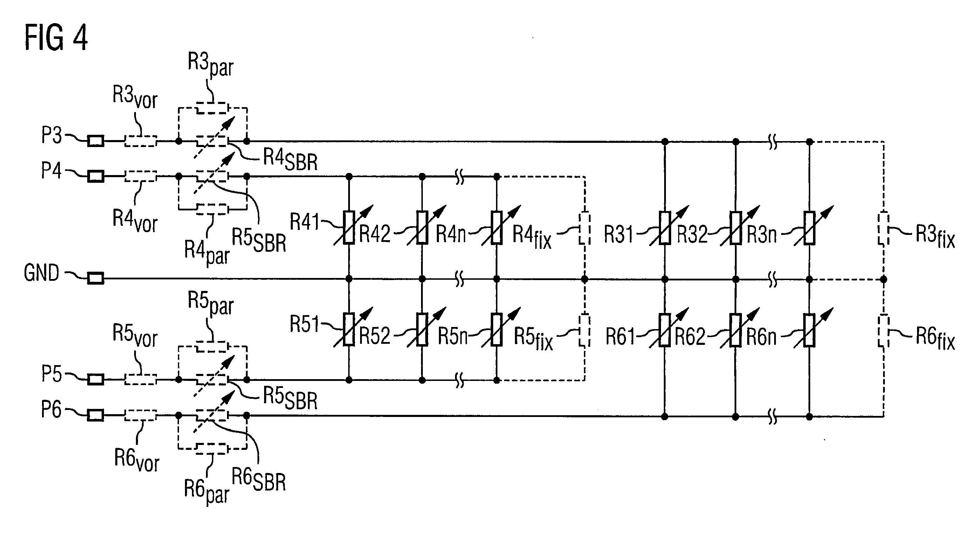

Figur 1 zeigt einen Fahrzeugsitz 2 in Draufsicht, auf dem eine Sensorsitzmatte 21 angeordnet ist, die aus Anschaulichkeitsgründen nur aus vier einzelnen Netzen 3, 4, 5, 6 von Messelementen, beispielsweise den variablen Widerständen der Figur 4, besteht.

Die Netze 3 und 4 sind in Längsrichtung des Fahrzeugs (Fahrtrichtung) vor den beiden Netzen 5 und 6 angeordnet; sie sind außerdem in der entsprechenden Querrichtung benachbart zueinander angeordnet, das heißt die gewichtsempfindlichen Flächen, die die beiden Netze 3 und 4 auf dem Fahrzeugsitz 2 überdecken, grenzen entlang einer Linie auf der Sitzmatte 21 aneinander an. Dasselbe gilt für die beiden hinteren Netze 5 und 6.

Die Netze 3, 4, 5, 6 weisen je einen Anschluss P3, P4, P5 bzw. P6 auf, über die jeweils ein Gesamtsignal jedes der Netze 3, 4, 5, 6 an eine Auswerteeinheit 7 übermittelt wird. Die Auswerteeinheit 7 enthält dabei entsprechend zur Auswertung der Signale geeignete Auswerteelektronik und ist auf der Sensorsitzmatte 21 angeordnet ist. Genauso gut könnte die Auswerteeinheit 7 jedoch auch an anderer Stelle des Fahrzeugs angeordnet sein, beispielsweise in der ebenfalls dargestellten zentralen Steuereinheit 8. Der Auswerteinheit 7 ist des Weiteren das Signal eines Gurtschlosssensors 12 zugeführt, der das Einrasten eines Sicherheitsgurtes 10 feststellt, der an dem Fahrzeugsitz 2 angeordnet ist. Ebenfalls dargestellt ist ein Fahrzeuginsasse 11, der sich angegurtet auf dem Fahrzeugsitz 2 befindet.

Die Auswerteeinheit 7 übermittelt ein Signal, beispielsweise ein binär codiertes Datenpaket, über die dargestellte Verbindungsleitung an die zentrale Steuereinheit 8. Das übermittelte Signal informiert die zentrale Steuereinheit 8 einerseits, ob eine Warnlampe 15 im Fahrgastraum aktiviert werden soll, die den Fahrzeuginsassen 11 auf einen gegebenenfalls nicht angelegten Sicherheitsgurt 10 hinweisen soll, und andererseits, ob eine mit der zentralen Steuereinheit 8 verbundene Auslöseeinheit 9 einen Airbag 14 aktivieren soll, sobald der zentralen Steuereinheit 8 Hinweise auf einen schweren Aufprallunfall vorliegen, beispielsweise durch zugeführte Signale von Beschleunigungs- und/ oder Drucksensoren.

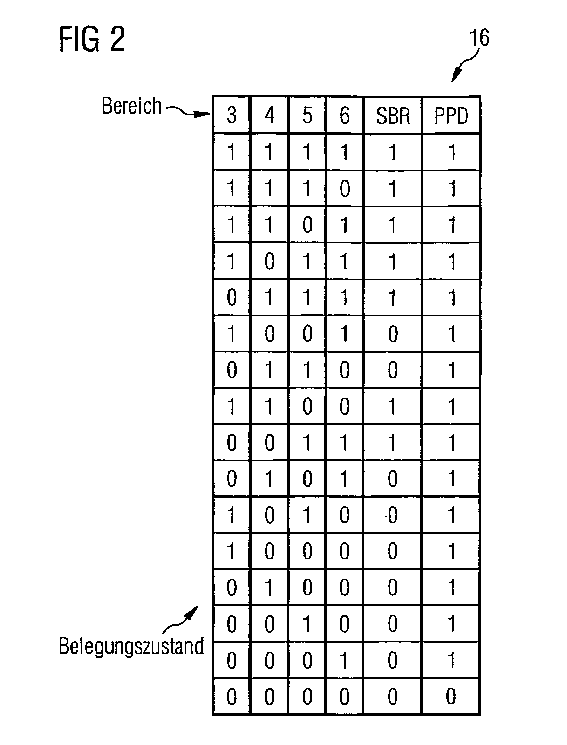

Figur 2 zeigt eine Entscheidungstabelle 16 zur Beeinflussung des Auslöseverhaltens des Insassenrückhaltemittels und/ oder zur Ausgabe eines Warnhinweises 15 über einen nicht angelegten Sicherheitsgurt 10.

In der ersten Zeile der Tabelle sind die Netze 3, 4, 5 und 6 angegeben, in den darunter liegenden Zeilen ist deren Belegungszustand angegeben: ein belegtes Netz 3, 4, 5, 6 mit einer logischen 1 und ein nicht belegtes Netz 3, 4, 5, 6 mit einer logischen 0. In den letzten beiden Spalten sind die jeweiligen Schlussfolgerungen für die Sitzbelegungserkennung hinsichtlich der Beeinflussung des Auslöseverhaltens des Rückhaltemittels 11 angegeben, gekennzeichnet mit dem Begriff "PPD" (passenger presence detection), und die entsprechende Schlussfolgerung für die Ausgabe eines Warnhinweises 15 wegen eines nicht angelegten Sicherheitsgurts 10, kurz als "SBR" (Seat Belt Reminder) bezeichnet.

Die zweite Zeile der Tabelle zeigt alle Netze 3, 4, 5, 6 als belegt (1) und die Felder "SBR" und "PPD" ebenfalls. Hier wird folglich ein Fahrzeuginsasse 11 auf dem Kraftfahrzeugsitz 2 sicher erkannt; diese Situation ist in der Figur 1 dargestellt. Folglich werden die Felder "SBR" und "PPD" jeweils mit 1 belegt. "SBR" 1 heißt, dass bei einem nicht angelegten Sicherheitsgurt 10 ein entsprechender Warnhinweis 15 ausgegeben werden soll. "PPD" bedeutet, dass die Möglichkeit zur gegebenenfalls notwendigen Einflussnahme auf das Auslöseverhalten eines Insassenrückhaltemittels freigegeben wird. Da sich ein Insasse auf dem Fahrzeugsitz befindet; üblicherweise, erfolgt dazu jedoch eine noch weitgehende Auswertung der Signale, beispielsweise hinsichtlich der Größe und des Gewichts des erkannten Fahrzeuginsassen, oft sogar unter Hinzuziehen ggf. weiterer verfügbarer Signale, beispielsweise von einer Fahrzeug-Innenraum-Kamera, inaktiven, kapazitiven oder ähnlichen Gewichtssensoren etc. Erst dann wird üblicherweise entschieden, ob beispielsweise ein Frontairbag ggf. nur zum Teil ausgelöst oder sogar nicht ausgelöst wird.

Die folgenden vier Zeilen der Tabelle 16 zeigen, dass diese Schlussfolgerungen auch dann gezogen werden, wenn mindestens ein Netz 3, 4, 5, 6 nicht belegt ist, erkennbar an der eingetragenen 0.

Sind jedoch lediglich die diagonal gegenüberliegenden Netze 3 und 6 oder 4 und 5 belegt, so wird kein Sicherheitsgurtwarnhinweis 15 ausgegeben, dargestellt durch zweimal 0 in der mit "SBR" gekennzeichneten Spalte, selbst wenn der Sicherheitsgurt 14 nicht angelegt wurde: es ist sehr unwahrscheinlich, dass eine solche Kombination von belegten Netzen durch einen Fahrzeuginsassen hervorgerufen wird, was bereits eingangs angesprochen wurde. Das Auslöseverhalten eines Insassenrückhaltemittels wird dabei dennoch nötigenfalls angepasst, da für diese Zwecke dennoch ein Insasse 11 auf dem Fahrzeugsitz 2 als erkannt gilt, dargestellt durch zweimal die Ziffer 1 in der Spalte "PPD".

Die Zeilen 9 und 10 der Tabelle 16 zeigen die Kombination von zwei in Fahrzeuglängsrichtung vorne bzw. hinten angeordneten Netzen 3 und 4 bzw. 5 und 6, die in jeweils Fahrzeugquerrichtung benachbart zueinander angeordnet sind. Bei beiden Kombinationen soll gemäß diesem Ausführungsbeispiel ggf. eine Beeinflussung des Auslöseverhaltens des Insassenschutzmittels 14 erfolgen und auch ggf. die Sicherheitsgurtwarnlampe 15 angeschaltet werden.

Die Zeilen 11 und 12 der Tabelle 16 zeigen die Kombination von zwei in Fahrzeuglängsrichtung hintereinander benachbart angeordneter Netze 4 und 6 bzw. 3 und 5. Bei beiden Kombinationen soll eine Beeinflussung des Auslöseverhaltens des Insassenschutzmittels 14 erfolgen, da vorsichtshalber ein anwesender Fahrgast 12 angenommen werden sollte. Allerdings wird eine Sicherheitsgurtwarnlampe nicht aktiviert, da eine entsprechend einseitige Belastung des Fahrzeugsitzes 2 üblicherweise nicht durch einen Fahrzeuginsassen 11 erzeugt wird. Alternativ könnte aber auch bei diesen beiden Kombinationen eine Sicherheitsgurtwarnlampe 15 aktiviert werde, falls dies auch in diesem Fall aus plausiblen Gründen gewünscht ist.

Ist nur eines der Netze 3, 4, 5, 6 belegt (1), so wird in diesem Ausführungsbeispiel keinesfalls ein Sicherheitsgurtwarnhinweis ausgegeben, dennoch aber eine Auslösestrategie für ein Insassenschutzmittel 14 gewählt, wie es für einen besetzten Fahrzeugsitz 2 angebracht erscheint.

Ist keines der vier Netze 3, 4, 5, 6 belegt, so wird weder eine Sicherheitsgurtwarnung 15 ausgelöst, noch wird das Auslöseverhalten eines Insassenrückhaltemittels 14 nötigenfalls angepasst.

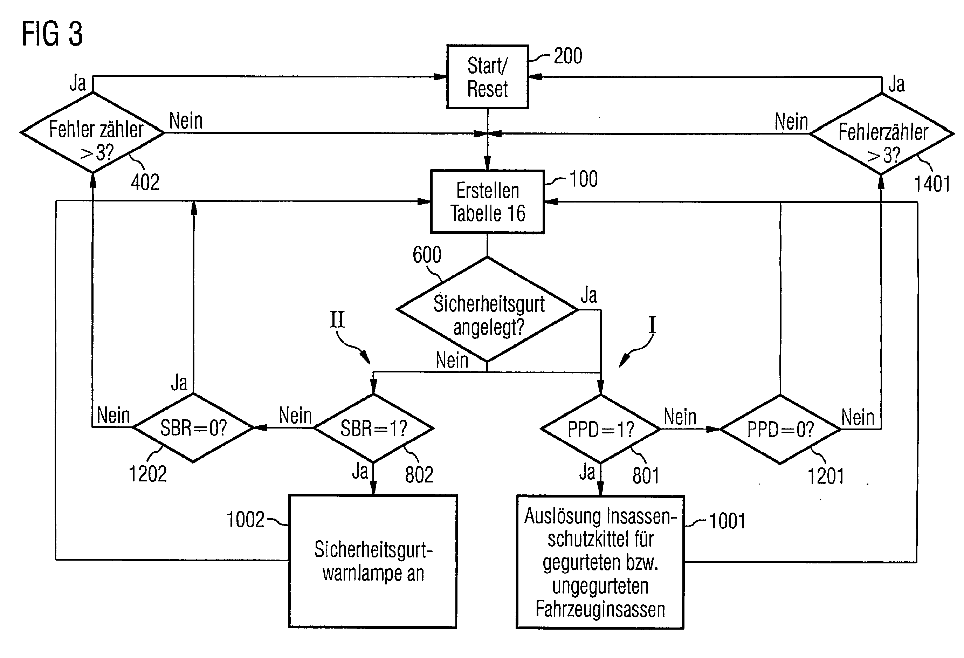

Aus der Beschreibung der Figur 2 wird deutlich, dass das erfindungsgemäße System auch als Verfahren ausgestaltet sein kann. Figur 3 zeigt ein Ausführungsbeispiel für solch ein Verfahren. In einem ersten Schritt 200 wird das System gestartet oder auch neu gestartet, falls ein Neustart des Systems nach Erkennen eines Fehlers durchgeführt werden musste. In einem zweiten Verfahrensschritt 400 wird der Belegungszustand der Netze 3, 4, 5, 6 ermittelt und aus der Tabelle 16 aus Figur 2 zu jeder Kombination von belegten oder unbelegten Netzen 3, 4, 5, 6 die jeweilige Schlussfolgerung für das System bezüglich "PPD" und "SBR", ausgelesen.

Im Schritt 600 wird der Zustand des Gurtschlosssensors 12 abgefragt. Ist der Sicherheitsgurt 10 angelegt, so folgt im Schritt 801 die Abfrage des logischen Status des Tabellenfeldes "PPD". Ist dieses Feld mit einer logischen 1 belegt, so erfolgt im Schritt 1001 die Auslösung eines Insassenschutzmittels 14 für einen gegurteten Fahrzeuginsassen 11, falls die zentrale Steuereinheit 8 zugleich einen entsprechend schweren Aufprallunfall ermittelt hat.

Je nach Fahrzeug wird nach einem erkannten Aufprallunfall und nach Auslösen eines oder mehrerer Insassenrückhaltemittel/s auch das System zum Erkennen der Belegung eines Fahrzeugsitzes abgeschalten. Solange das System jedoch noch aktiv ist, wird jedoch mit neuen Messwerten der Netze 3, 4, 5, 6 erneut eine aktuelle Tabelle 16 gemäß dem Verfahrensschritt 400 erstellt.

Wird hingegen im Verfahrensschritt 600 festgestellt, dass ein Sicherheitsgurt 10 nicht angelegt wurde, so werden zwei parallele Verfahrenszweige I und II abgearbeitet.

Einerseits werden im Verfahrenszweig I die Verfahrensschritte 801, 1001 und 1002 so abgearbeitet wie bereits beschrieben, mit einem Unterschied: Im Verfahrensschritt 1001 erfolgt die Auslösung des Insassenrückhaltemittels 14 nun für einen ungegurteten Fahrzeuginsassen 11 (nicht in Figur 1 dargestellt).

Andererseits wird nun der weitere Verafhrenszweig II abgearbeit, da ein Sicherheitsgurt nicht angelegt wurde. In einem Verfahrensschritt 802 wird der Status des Feldes "SBR" der Tabelle 16 abgefragt. Ist dieser mit einer 1 belegt, so wird in einem weiteren Verfahrensschritt 1002 ein Warnhinweis in Form einer Sicherheitsgurtwarnlampe 15 (Figur 1) angeschaltet, um den Fahrzeuginsassen 11 zum Anlegen des Sicherheitsgurts 10 aufzufordern. Wird jedoch in einem Verfahrensschritt 1202 festgestellt, dass das Feld "SBR" mit 0 belegt ist, so wird erneut mit dem Erstellen einer Tabelle 16 gemäß Verfahrensschritt 400 begonnen.

In beiden parallelen Verfahrenszweigen I und II wird in den Verfahrensschritten 1201 und 1202 jedoch auch festgestellt, wenn die Felder "PPD" bzw. "SBR" weder mit 0 noch mit 1 belegt sind. In diesem Fall liegt ein Fehler vor. Ein solcher Fehler wird in jedem Verfahrenszweig I und II je einem Fehlerzähler 1401 bzw. 1402 gemeldet, der im gezeigten Ausführungsbeispiel überprüft, ob die maximale Anzahl von drei Fehlermeldungen bereits vorliegt. Liegt die maximale Fehlerzahl von drei in den Fehlerzählern 1401 bzw. 1402 bereits vor, so wird das System im Verfahrensschritt 200 neu gestartet. Ist der Fehlerzählerstand 3 jedoch noch nicht erreicht, so wird fortgefahren mit dem Erstellen einer aktuellen Tabelle 16 im Verfahrensschritt 400. Das Erkennen eines Fehlers kann jedoch auch auf eine andere Weise ablaufen.

Figur 4 zeigt eine Ausführungsform des erfindungsgemäßen Systems in Schaltungsdarstellung. Dargestellt sind die vier Netze 3, 4, 5, 6 der Figur 1 mit den jeweiligen Anschlüssen P3, P4, P5, P6 wie in Figur 1. Weiterhin ist der Masseanschluss GND dargestellt. Das erste Netz 3 besteht aus gewichtssenitiven Widerstandselementen R31, R32 und R3n, die parallel zwischen die Anschlüsse P3 und GND geschaltet sind. Ebenso umfasst auch das zweite Netz 4 parallel geschaltete Widerstandselemente R41, R42 und R4n, die parallel zwischen den Anschluss P4 und Masse GND geschaltet sind. Ebenso verschaltet sind die übrigen Netze 5 und 6 mit dem Widerstandselementen R51, R52, R5n bzw. R61, R62, R6n, die zwischen die Anschlüsse P4 bzw. P5 und GND geschaltet sind. Der Buchstabe n in den Widerstandselementen R3n, R4n, R5n und R6n soll darauf hinweisen, dass prinzipiell beliebig viele gewichtsabhängige Widerstandselemente parallel in einem der Netze 3, 4, 5, 6 verschaltet sein können.

Exemplarisch soll hier die Funktionsweise des ersten Netzes 3 erläutert werden, wobei die Erklärungen jedoch auch analog für die anderen Netze 4, 5, 6 gelten sollen.

Eine Konstantstromquelle der Auswerteeinheit 7 speist im Anschluss P3 einen Konstantstrom ein. Die Widerstandselemente R31, R32, ..., R3n verändern ihren Wert, sobald ein Gewicht auf sie einwirkt. Dadurch variiert die Spannung, die die Auswerteeinheit 7 zwischen dem Anschluss P3 und Masse GND abgreifen kann. Aufgrund einer in der Auswerteeinheit 7 hinterlegten Kennlinie kann somit auf das aufliegende Gewicht geschlossen werden.

Gestrichelt eingezeichnet ist ein zu den übrigen Widerständen parallel geschalteter Fixwiderstand R3_{Fix}. Dieser bestimmt einen oberen Spannungsmesswert: Ist eine Verbindungsleitung zwischen den Widerstandselementen R31, R32, R3n unterbrochen, so übersteigt die am Anschluss P3 abgreifbare Spannung einen durch den Widerstand R3_{Fix} festgelegten oberen Wert. Auf diese weise kann Leitungsunterbrechung von der Auswerteeinheit 7 festgestellt werden.

Zwischen dem Anschluss P3 und den Widerständen R31, R32, R3n ist seriell ein weiterer optionaler Widerstand R3ᵥₒᵣ eingezeichnet. Dieser Fixwiderstand R3ᵥₒᵣ wird vorteilhafterweise dann eingebracht, wenn die gewichtssensitiven Widerstandselemente R31, R32, ..., R3n als Kurzschlussschalter ausgebildet sind. R3ᵥₒᵣ gibt für diesen Fall eine Mindestspannung vor, die an ihm abfallen muss. Liegt ein Kurzschluss an den Anschlüssen vor, sinkt die abgreifbare Spannung auf Masse und kann so von der Auswerteeinheit 7 erkannt werden.

Zwischen dem Fixwiderstand R3ᵥₒᵣ und den gewichtssensitiven Widerstandselementen R31, R32, ..., R3n ist im dargestellten Ausführungsbeispiel noch ein weiteres gewichtssensitives Widerstandselement R3_{SBR} eingezeichnet, dessen Signal als weitere Plausibilisierung für einen auf dem Kraftfahrzeugsitz 2 sitzenden Fahrzeuginsassen 11 optional zusätzlich verwendet werden kann. Üblicherweise ist solch ein Gurtwarn-Widerstandselement R3_{SBR} an einem Auflageort für einen Beckenknochen eines Fahrzeuginsassen 11 positioniert, so dass die Wahrscheinlichkeit sehr hoch ist, dass ein Spannungssignal, das maßgeblich durch dieses Widerstandselement R3_{SBR} beeinflusst wird, von einem aufsitzenden Fahrzeuginsassen herrührt. Zur Leitungsunterbrechungs-Erkennung ist parallel zum Gurtwarn-Widerstandselement R3_{SBR} noch ein weiterer Fixwiderstand R3ₚₐᵣ eingefügt.

## Patentansprüche

1. System zum Erkennen der Belegung eines Fahrzeugsitzes (2) mit flächig auf der Sitzfläche des Fahrzeugsitzes (2) angeordneten Messelementen (R31...R3n,...R61...R6n), an denen je ein elektrisches Signal abgegriffen werden kann, das abhängig von der aufgebrachten Gewichtskraft variiert, und die in mehreren Netzen (3, 4, 5, 6) so miteinander verschaltet sind, dass für jedes Netz je ein elektrisches Gesamtsignal (G3, G4, G5, G6) ermittelt wird, aus dem eine Auswerteeinheit (7) feststellen kann, ob ein Netz (3, 4, 5, 6) belegt (1) oder unbelegt (0) ist, bei dem
- die Auslösung eines Insassenschutzmittels (14) bei einem Aufprallereignis wie bei einem anwesenden Fahrzeuginsassen erfolgt, wenn mindestens ein Netz (3, 4, 5, 6) als belegt (1) erkannt wird und
- ein entsprechender Warnhinweis (15) an einen Fahrzeuginsassen nur dann ausgegeben wird, wenn der Sicherheitsgurt nicht angelegt ist und gleichzeitig ein weiteres Netz (3, 4, 5, 6) belegt (1) ist, das in Längs- oder Querrichtung des Fahrzeugs benachbart zu dem bereits erkannten Netz angeordnet ist.

2. System nach Anspruch 1, bei dem für jedes belegte Netz (3, 4, 5, 6) das weitere belegte Netz (3, 4, 5, 6), das zur Ausgabe eines Warnhinweises (15) an den Fahrzeuginsassen (11) notwendig erkannt werden muss, entsprechend einer Regel festgelegt ist, die in der Auswerteeinheit (7) hinterlegt ist.

3. System nach Anspruch 1 oder 2, wobei die Messelemente (R31...R3n,...R61...R6n) eines Netzes (3, 4, 5, 6) parallel geschaltete Widerstände sind, deren Widerstandswerte mit der aufgebrachten Gewichtskraft gemäß einer Kennlinie variieren.

4. System nach einem der Ansprüche 1 bis 3, bei dem die abgreifbaren Signale Spannungen sind, die bei einem bekannten Stromfluss über den Widerständen (R31...R3n,...R61...R6n) abfallen.

5. System nach Anspruch 3 oder 4, bei dem ein Vorwiderstand (R3ᵥₒᵣ, R4ᵥₒᵣ, R5ᵥₒᵣ, R6ᵥₒᵣ) seriell vor einem Netz (3, 4, 5, 6) geschaltet ist.

6. System nach Anspruch 5, bei dem je ein Vorwiderstand (R3ᵥₒᵣ, R4ᵥₒᵣ, R5ᵥₒᵣ, R6ᵥₒᵣ) seriell vor jedem Netz (3, 4, 5, 6) geschaltet ist.

## Claims

1. System for identifying occupancy of a vehicle seat (2) with measuring elements (R31...R3n, ...R61...R6n), which are arranged flat on the seating area of the vehicle seat (2), and at which a electrical signal can be tapped, which signal varies according to the weight force applied, and which measuring elements are connected to one another across several networks (3, 4, 5, 6) in such a way that one electrical overall signal (G3, G4, G5, G6) is determined for each network, from which signal an evaluation unit (7) can establish whether a network (3, 4, 5, 6) is occupied (1) or unoccupied (0), in which
- the triggering of an occupant protection system (14) occurs in the event of a collision as in the case of a vehicle occupant being present, if at least one network (3, 4, 5, 6) is identified as being occupied (1) and
- a corresponding warning (15) is only output to a vehicle occupant, if the seat belt is not fastened and at the same time an additional network (3, 4, 5, 6) is occupied (1), said additional network being arranged in the longitudinal or transversal direction of the vehicle adjacent to the network that has already been identified.

2. System according to claim 1, in which for each occupied network (3, 4, 5, 6) the additional occupied network (3, 4, 5, 6), which must necessarily be identified for outputting a warning (15) to the vehicle occupant (11) is determined according to a rule which is stored in the evaluation unit (7).

3. System according to claim 1 or 2, wherein the measuring elements (R31...R3n,...R61...R6n) of a network (3, 4, 5, 6) are resistors connected in parallel, the resistance values of which vary with the applied weight force according to a characteristic curve.

4. System according to one of claims 1 to 3, in which the signals that can be tapped are voltages, that at a known current flow drop across the resistors (R31...R3n, ...R61...R6n).

5. System according to claim 3 or 4, in which a protective resistor (P3ᵥₒᵣ, P4ᵥₒᵣ, P5ᵥₒᵣ, R6ᵥₒᵣ) is connected in series in front of a network (3, 4, 5, 6).

6. System according to claim 5, in which a protective resistor (R3 ᵥₒᵣ, R4 ᵥₒᵣ, P5 ᵥₒᵣ, R6 ᵥₒᵣ) is connected in series in front of each network (3, 4, 5, 6).

## Revendications

1. Système de détection d'occupation d'un siège de véhicule (2) avec des éléments de mesure (R31...R3n,...R61...R6n) placés suivant deux dimensions sur la surface du siège de véhicule (2) et sur lesquels on peut lire respectivement un signal électrique variant en fonction de la force pondérale appliquée et qui sont commutés les uns aux autres dans plusieurs réseaux (3, 4, 5, 6) de manière à ce qu'on puisse déterminer pour chaque réseau respectivement un signal électrique total (G3, G4, G5, G6) à partir duquel une unité d'évaluation (7) peut déterminer si un réseau (3, 4, 5, 6) est occupé (1) ou n'est pas occupé (0) dans lequel :
- le déclenchement d'un dispositif de protection des occupants (14) a lieu en cas de collision comme si un occupant était présent lorsque au moins un réseau (3, 4, 5, 6) est détecté comme étant occupé (1) et
- un avertissement correspondant (15) n'est émis à un occupant que lorsque la ceinture de sécurité n'est pas bouclée et que simultanément un autre réseau (3, 4, 5, 6) placé dans la direction longitudinale ou transversale du véhicule à proximité du réseau déjà détecté est occupé (1) .

2. Système selon la revendication 1 dans lequel pour chaque réseau occupé (3, 4, 5, 6) l'autre réseau occupé (3, 4, 5, 6) devant être absolument détecté pour l'émission d'un avertissement (15) à l'occupant (11) est défini suivant une règle enregistrée dans l'unité d'évaluation (7).

3. Système selon la revendication 1 ou 2 dans lequel les éléments de mesure (R31...R3n,...R61...R6n) d'un réseau (3, 4, 5, 6) sont des résistances branchées en parallèle dont les valeurs de résistance varient avec la force pondérale appliquée suivant une courbe caractéristique.

4. Système selon l'une quelconque des revendications 1 à 3 dans lequel les signaux pouvant être lus sont des tensions qui chutent via les résistances (R31...R3n,...R61...R6n) dans le cas d'une conduction électrique connue.

5. Système selon la revendication 3 ou 4 dans lequel une résistance additionnelle (R3ᵥₒᵣ, R4ᵥₒᵣ R5ᵥₒᵣ, R6ᵥₒᵣ) est branchée en série avant un réseau (3, 4, 5, 6).

6. Système selon la revendication 5 dans lequel respectivement une résistance additionnelle (R3ᵥₒᵣ, R4ᵥₒᵣ, R5ᵥₒᵣ, R6ᵥₒᵣ) est branchée en série avant chaque réseau (3, 4, 5, 6).
